# FASCICULE DE BREVET EUROPEEN

(11) **EP 1 096 203 B1**
(45) Date de publication et mention de la délivrance du brevet: **28.04.2004**
(21) Numéro de dépôt: 00390017.2
(22) Date de dépôt: 23.10.2000
(51) Int. Cl.: F23D 14/14, F24C 1/08, A01K 31/20

(54) **Emetteur de chauffage à rayonnement infrarouge au gaz**
Gasbetriebene Infrarotstrahlende Heizungsanlage
Infra-red gas heater

(30) Priorité: 29.10.1999 FR 9914080; 11.07.2000 FR 0009015
(43) Date de publication de la demande: 02.05.2001
(73) Titulaire: Centre d'Etude et de Réalisation d'Equipement et de Matériel (CEREM), 47310 Laplume (FR)
(72) Inventeur: Sirand, Joseph, 47310 Laplume (FR)
(74) Mandataire: Morelle, Guy Georges Alain

(56) Documents cités:
- EP-A- 0 950 853
- CH-A- 371 237
- DE-A- 19 547 962
- DE-U- 9 321 418
- FR-A- 1 577 719
- US-A- 3 857 670
- US-A- 4 039 275

## Description

L'invention concerne un émetteur surélevé d'appareil de chauffage à rayonnement infrarouge et lumineux au gaz pour le chauffage directionnel, capable de fournir à de très basses pressions d'alimentation en gaz, un rendement élevé de rayonnement. Cet émetteur est destiné aux appareils de chauffage des surfaces en locaux industriels, artisanaux, agricoles et tertiaires aussi qu'à toute utilisation de plein air ou de semi-plein air.

Dans l'état actuel de la technique, les appareils de chauffage à émetteur de rayonnement infrarouge sont d'une utilisation courante dont certains ont un très bon rendement de rayonnement comme celui décrit dans le document EP 0 382 286 au nom du déposant. Néanmoins l'obtention de ce haut rendement est conditionné par une pression nominale d'alimentation en gaz sensiblement supérieure à celle prévue pour l'émetteur objet de l'invention.

D'autres appareils ont un bon rendement en basse pression d'alimentation en gaz. Il s'agit des radiants classiques à plaquettes perforées en céramique réfractaire. Ces plaquettes sont traversées par le mélange air-gaz entrant par une face, s'enflammant et rayonnant sur l'autre face. Le facteur limitant de l'emploi de ces appareils à plaquettes céramique est leur inadaptation aux milieux poussiéreux car leur nettoyage est difficile et le lavage à l'eau n'est pas compatible avec les plaquettes céramique. L'inconvénient de ces plaquettes est aussi leur fragilité et toute plaquette fendue doit être changée sous peine de communication de la flamme à la face interne de cette plaquette. Il faut aussi ajouter une mauvaise résistance aux courants d'air. Dans un autre type d'appareil pouvant fonctionner en très basse pression, mais avec un rendement de rayonnement moyen ou médiocre, une rampe à gaz classique, de forme rectiligne ou circulaire, du type de celles utilisées pour les réchauds ménagers est placée à la base d'une enceinte ajourée en métal réfractaire, les becs de flamme de la rampe venant lécher la paroi verticale ou oblique de cette enceinte et communiquer à cette surface métallique ajourée, leur chaleur de combustion. Le rougissement ainsi produit est irrégulier, non homogène, et le niveau de température obtenu n'engendre pas un rayonnement infrarouge de très haute performance. Dans ce type d'appareils à flamme dite basse; on peut mentionner le document GB 2 091 869 suivant le même principe que celui décrit ci-dessus avec un brûleur à gaz de type "réchaud".
Ce brûleur, placé à la base de l'appareil, laisse s'élever une flamme circulaire autour d'un corps de chauffe constitué d'un matériau noir, isolé côté interne, et s'appuyant sur un grillage côté externe. Cette flamme parvient à plein régime à atteindre, mais sans homogénéité, la plus grande partie du matériau noir, mais s'arrête à mi-hauteur ou moins, quand le régime décroît, avec comme conséquence une sensible réduction de la surface radiante et donc du champ de rayonnement. Également, dans ce type d'appareil à flamme dite basse parce que produite à la base d'une surface susceptible de produire un rayonnement infrarouge, il existe aussi des appareils où la flamme vient chauffer des pavés en céramique réfractaire de formes diverses, la rampe à becs étant même remplacée par un brûleur à torche verticale comme dans le document US 4 719 874. Le rendement de rayonnement et la plage des longueurs d'ondes infrarouges produites peuvent, dans ce dernier cas être qualifiés de médiocres et atteignent difficilement le seuil minimum de rendement permettant l'utilisation du terme radiant.

Enfin il existe aussi des appareils entièrement métalliques fonctionnant selon le même schéma que les appareils à plaquettes céramique, ces dernières étant remplacées par une feuille de résille métallique de faible épaisseur et finement ajourée. La position de cette résille, doit très peu s'écarter de l'horizontale notamment en raison du fait que si l'appareil est incliné, le flux air gaz arrivant de haut en bas, côté interne, au milieu de la feuille de résille, la moitié basse de la résille ne reçoit plus, côté interne, qu'une infime partie du mélange carburant-comburant et la combustion côté externe devient insignifiante sur toute cette moitié basse qui ne rougit plus. Par contre, la moitié haute recevant le double de ses besoins en mélange carburant-comburant, on constate une surchauffe anormale. Or l'intérêt d'un émetteur infrarouge directionnel vers le bas n'est pas de se limiter à une zone restreinte proche de la verticale mais de pouvoir fournir un rayonnement oblique de plus grande amplitude dans les directions désirées.

Pour tenter de réduire cet inconvénient d'une résille trop chaude sur une moitié et sombre sur l'autre, il est certes prévu, côté interne, une résille à plus grosse maille, parallèle à la résille de rayonnement, pour étaler le flux. Si le résultat est partiellement atteint lorsqu'on ne s'écarte pas de plus de quelques degrés de la position horizontale, l'effet est pratiquement nul sur la résille de rayonnement en position oblique.

Enfin, le fait qu'il ne soit prévu sur ce type d'émetteur qu'une seule résille finement ajourée pour une surface de rayonnement correspondant à la valeur nominale de la puissance de l'appareil, rend ce type d'appareil peu enclin à supporter un niveau de température correspondant à une part très intéressante des longueurs d'ondes infrarouges à fort rendement de rayonnement. L'expérience montre qu'une seule résille métallique, portée à plus de 700 ° C et recevant un flux air-gaz à faible vitesse (en raison de la faible pression), n'est pas en mesure de combattre efficacement le risque d'une prise de feu interne.

Enfin, pour l'ensemble des appareils mentionnés ci-dessus, la résistance aux courants d'air est un facteur limitant dans la pratique leur utilisation à une vitesse de l'air de l'ordre de 1 mètre/seconde au maximum.

On connaît également le document Vaillant DE 195 47 962 qui se rapporte à un brûleur radiant fonctionnant impérativement sous air pulsé. Le mélange combustible arrive sous pression grâce à une soufflerie après avoir traversé des canaux réalisés dans un corps de remplissage, dans une première chambre dite de répartition délimitée par un corps perforé vers l'arrière par lesdits canaux pour une alimentation du mélange combustible et vers l'avant par une première enceinte d'étranglement. Le mélange combustible ayant traversé l'enceinte d'étranglement arrive dans une deuxième chambre dite de répartition délimitée vers l'avant par une deuxième enceinte dite de répartition, puis après avoir traversé cette deuxième enceinte, pénètre dans un dernière chambre délimitée vers l'avant par une troisième enceinte qui délimite la tête du brûleur et sur laquelle se produit la combustion radiante sans flamme du mélange, troisième enceinte qui joue donc le rôle d'émission du rayonnement chauffant. L'enceinte d'étranglement peut être composée de plusieurs enceintes distinctes, présentant une certaine distance entre elles et décalées l'une par rapport à l'autre afin de décaler les perçages. Les enceintes d'étranglement et de répartition adoptent chacune une forme cylindrique à l'extrémité de laquelle est soudée une partie frontale de forme convexe afin de contrôler et orienter les déformations de celle-ci sous l'effet de la chaleur. L'enceinte d'émission radiante, et le cas échéant les enceintes d'étranglement et de répartition peuvent être constituées chacune d'un tissu de fils qui adopte une forme spécifique pour améliorer la résistance aux contraintes. La fonction d'anti-retour de flamme est essentiellement assumée par le corps de remplissage muni des canaux 4.

On connaît également le document US 3 857 670 qui se rapporte à un brûleur radiant possédant un corps creux délimité par une paroi arrière et une paroi périphérique fermée à l'intérieur desquelles le mélange air-gaz est introduit, et délimité vers l'avant par une paroi plane perforée pour une diffusion du mélange air-gaz dans une chambre de détente. La chambre de détente est délimitée vers l'avant par un écran primaire générateur de rayonnement infrarouge sur la paroi extérieure duquel se produit la combustion. Une grille de réflexion du rayonnement infrarouge est en outre placée en avant de l'écran primaire. L'écran primaire de forme convexe comprend deux ou plusieurs couches d'écran à mailles fines du type chaîne et trame, soudées entre elles afin d'éviter tout espace entre les couches dans lesquels pourrait se produire une combustion. La grille de réflexion du rayonnement infrarouge est de forme générale plane et est fabriquée à partir d'un écran à mailles grossières. L'alimentation en gaz combustible se fait par une canalisation raccordée au corps creux par l'intermédiaire de sa paroi arrière.

Aussi la présente invention vise-t-elle à pallier les inconvénients de ces appareils de chauffage à émetteur infrarouge et particulièrement lorsqu'il est requis d'utiliser une très basse pression en valeur nominale, inférieure à 50 mbar.

Un autre objectif de l'invention est d'obtenir sur des parois réfractaires ajourées, inoxydables, non poreuses, obliques ou verticales:
- un rayonnement parfaitement réparti,
- une émission infrarouge de haute température pour bénéficier d'un rendement de rayonnement élevé, c'est à dire un fort pourcentage de chaleur rayonnée par rapport à la chaleur totale produite.
L'objectif doit donc être, pour assurer une grande fiabilité de fonctionnement à haute température, de réunir les conditions adéquates pour que la température soit la plus élevée possible à la surface externe de l'émetteur tout en étant plus modérée à l'intérieur, mais toutefois suffisante pour assurer la pyrolyse des poussières organiques.

Un autre objectif de l'invention est de permettre, par la nature inoxydable et non poreuse de l'émetteur, le lavage à l'eau, aussi bien à l'intérieur qu'à l'extérieur.

Enfin, comme il le sera montré plus loin, la conception de la structure de l'invention permet d'atteindre deux objectifs supplémentaires :
- un fonctionnement silencieux,
- une grande résistance au vent.

L'émetteur infrarouge selon l'invention convient donc à de nombreuses applications lorsque la source de gaz disponible ne peut ou ne doit être délivrée qu'à très basse pression, qu'il s'agisse de contraintes propres à certains réseaux de distribution, de respect de réglementations ou encore de remplacement partiel d'appareils existants, dans des installations complètes conçues pour les très basses pressions, c'est à dire pour des pressions généralement comprises entre 15 et 50 mbar. Ces applications concernent de nombreux domaines où un dispositif de chauffage surélevé par émetteur infrarouge directionnel est à la fois la solution la plus adaptée et la plus économique dans l'agriculture, l'industrie, le tertiaire et autres secteurs.

Plus précisément, l'invention consiste en un émetteur infrarouge à rayonnement lumineux caractérisé en ce qu'il comprend :
- une alimentation en gaz à très basse pression et en air primaire atmosphérique par venturi, ladite alimentation comportant au moins un injecteur gaz, un porte-injecteur, une valve de sécurité, un raccord d'alimentation en gaz, notamment pour des appareils de chauffage surélevés pour le chauffage directionnel vers le sol et/ou sur les côtés dans les secteurs agricoles, industriels, artisanaux et tertiaires,
- une structure géométrique comportant de manière concentrique, au moins une première enceinte de répartition, une deuxième enceinte de diffusion et de barrière anti-retour de flamme, de protection thermique et de premier confinement, une troisième enceinte de combustion et d'émission infrarouge, une quatrième enceinte d'amplification et de second confinement,
- un plateau supérieur sensiblement horizontal sous lequel lesdites au moins première, deuxième, troisième, quatrième enceintes sont fixées concentriquement au dit plateau, emboîtées l'une dans l'autre,
- une embouchure centrale amenant le flux air-gaz perpendiculairement au dit plateau, dans l'espace intérieur créé par la première enceinte.

Selon une caractéristique, ladite deuxième enceinte est divisée en une deuxième enceinte de diffusion et de barrière anti-retour de flamme et en une cinquième enceinte de protection thermique et de premier confinement également concentrique pouvant être intercalée entre les deuxième et troisième enceintes selon les conditions de pression d'alimentation en gaz et l'instabilité de l'air ambiant de l'environnement.

Selon une autre caractéristique, lesdites première, deuxième, troisième, quatrième enceintes présentent en surface de révolution sur 360°, des parois latérales, obliques, verticales ou hémisphériques, en matériau, réfractaire, inoxydable, perméable, non poreux et rougissant à la chaleur.

Selon une autre caractéristique, l'émetteur selon l'invention comprend une alimentation du flux air-gaz dirigée de haut en bas, et une embouchure centrale solidaire dudit plateau supérieur, alors ouvert en son centre, étanche avec lui, amenant le flux air-gaz perpendiculairement au dit plateau, par l'ouverture centrale de celui-ci dans l'espace intérieur créé par la première enceinte.

Selon une autre caractéristique, l'émetteur selon l'invention comprend une alimentation du flux air-gaz dirigée de bas en haut et une embouchure centrale jointive avec les deuxième et troisième enceintes, et amenant le flux air-gaz perpendiculairement au plateau supérieur alors plein en son centre dans l'espace intérieur créé par la première enceinte.

Selon une autre caractéristique, les parois latérales des deuxième, cinquième, et troisième enceintes sont tenues espacées par des moyens d'écartement tels que des nervures en relief pratiquées sur ces enceintes, les tenant à une distance contrôlée les unes des autres et leur servant de raidisseurs anti-déformation à la chaleur sans obscurcir l'émission lumineuse aux lignes de contact des reliefs, cette distance d'écartement étant d'ailleurs limitée au passage d'une mince couche de flux dynamique se frayant un passage à travers les orifices des parois ajourées spécifiques des deuxième et cinquième enceintes d'une part, des cinquième et troisième enceintes d'autre part.

Selon une autre caractéristique, l'enceinte de répartition dans sa forme tronconique, cylindrique, ou hémisphérique, comporte dans son volume interne, selon l'axe vertical central de symétrie, un cône plein ou très finement perforé, sommet vers le haut au débouché de l'arrivée du flux air-gaz, donnant ainsi en combinaison avec la première enceinte dans les formes ci-dessus un moyen équivalent de parfaite répartition du flux air-gaz, à celui obtenu directement avec la première enceinte, sommet vers le bas de la forme conique.

Selon une autre caractéristique, l'enceinte de répartition, pour les formes tronconique, cylindrique, ou hémisphérique, comporte dans son volume interne, selon l'axe vertical central de symétrie un cône plein de pré-répartition, base contre le plateau et sommet vers le bas au débouché de l'arrivée du flux air-gaz, devenant ainsi en combinaison avec la première enceinte dans les formes ci-dessus un moyen de parfaite répartition du flux air-gaz.

D'autres caractéristiques et avantages apparaîtront à la lecture de la description qui suit de plusieurs exemples de modes de réalisations de l'émetteur selon l'invention, accompagnée des dessins annexés, exemples donnés à titre illustratif non limitatif.
La figure 1 est une vue schématique en coupe transversale d'un premier exemple de mode de réalisation d'un émetteur selon l'invention.
Les figures 2a, 2b, 2c, 2d sont des vues schématiques en coupe transversale d'un deuxième, troisième, quatrième, et cinquième exemples de mode de réalisation d'un émetteur selon l'invention, respectivement.
La figure 3 est une vue schématique en coupe transversale d'un sixième exemple de mode de réalisation d'un émetteur selon l'invention.
Les figures 4a, 4b, 4c, sont des vues schématiques en coupe transversale d'un septième, huitième, et neuvième exemples de mode de réalisation d'un émetteur selon l'invention, respectivement
La figure 5 est une vue schématique en coupe transversale d'un dixième exemple de mode de réalisation d'un émetteur selon l'invention.
Les figures 6a, 6b, 6c, sont des vues schématiques en coupe transversale d'un onzième, douzième, et treizième exemples de mode de réalisation d'un émetteur selon l'invention, respectivement
La figure 7 est une vue schématique en coupe transversale d'un quatorzième exemple de mode de réalisation d'un émetteur selon l'invention.
Les figures 8a, 8b, 8c, sont des vues schématiques en coupe transversale d'un quinzième, seizième, et dix-septième exemples de mode de réalisation d'un émetteur selon l'invention, respectivement

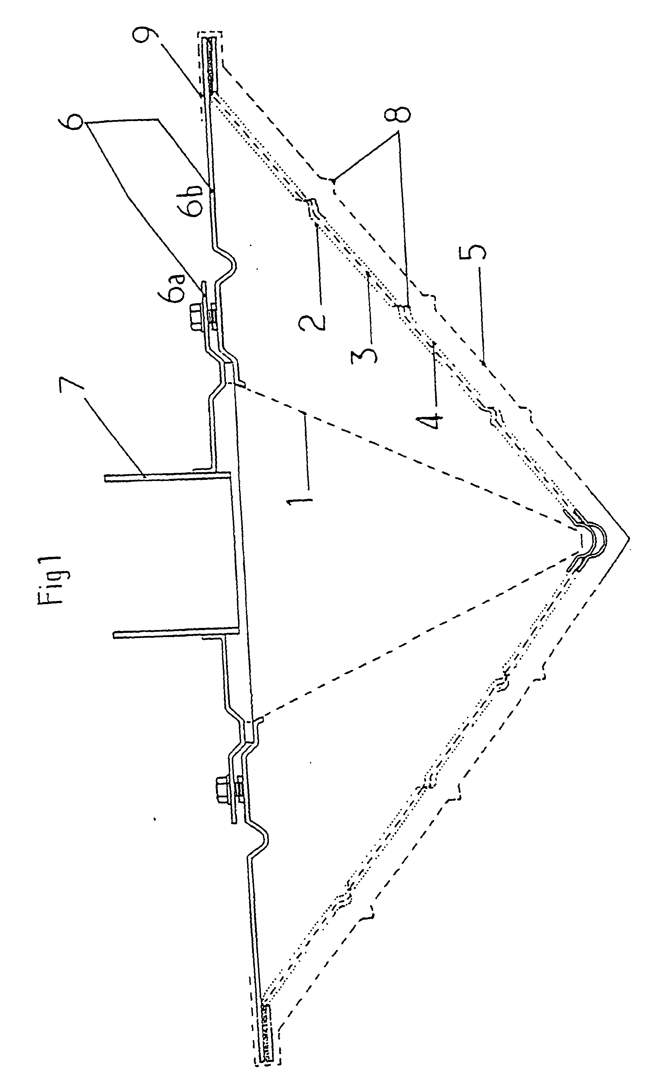

La figure 1 donne un exemple de la réalisation suivant une géométrie conique sommet vers le bas, comportant cinq enceintes concentriques façonnées dans cet exemple en tôle métallique réfractaire, perforée de façon spécifique selon le rôle joué par chaque enceinte.
L'enceinte 1 est un premier répartiteur du mélange air-gaz destiné à éclater ce flux de façon uniforme en direction de tous les points de la surface interne de l'enceinte 2.
L'enceinte 2 est à la fois un diffuseur du mélange air-gaz réparti par l'enceinte 1 et une barrière anti-retour de flamme évitant ainsi la possibilité d'une prise de feu à l'injecteur.
Cette enceinte 2 assure également une première pyrolyse des poussières de l'air primaire fourni par le flux air-gaz.
L'enceinte 3 sera décrite après l'enceinte 5.
L'enceinte 4 est identique à l'enceinte 2 mais sa fonction est différente : c'est à fleur de sa paroi externe que s'établit la combustion du mélange air-gaz et la naissance de l'émission infrarouge.
L'enceinte 5 est appelée enceinte de confinement et d'amplification de l'émission infrarouge. Elle remplit une fonction connue, notamment dans les appareils à plaques céramique, de récupération de la chaleur perdue, mais aussi une nouvelle fonction d'amplification très importante de l'émission infrarouge de l'enceinte 4 en raison de la nature et de la conception de ces deux enceintes décrites plus loin.
L'enceinte 3 est une enceinte de protection thermique faisant écran entre les enceintes 2 et 4 de façon à modérer le niveau de température issue de 4 en direction de 2. Pour illustrer le rôle de l'enceinte 3, il s'agit de limiter par exemple à 700 °C, la température de la surface 2 quand la surface 4 est portée à 900 °C. L'écran constitué par l'enceinte 3, abaisse par sa présence même à 800 °C sa propre température reçue de l'enceinte 4 et limite ainsi à 700 °C la température de l'enceinte 2, évitant alors un trop fort rougissement de celle-ci et ne compromettant pas son rôle de barrière contre une combustion interne. Néanmoins ce rougissement est suffisant pour assurer une première pyrolyse des poussières de l'air primaire comme indiqué plus haut.
Par ailleurs, l'enceinte 3 se comporte par rapport à l'enceinte 4 comme un finisseur de parfaite répartition.

Malgré le lourd handicap d'une alimentation en gaz à très faible pression nominale dans un brûleur atmosphérique (sans alimentation mécanique en air de combustion), l'émetteur infrarouge selon l'invention se révèle apte à remplir les nombreuses conditions sans lesquelles ne sont pas obtenues les exigences ci-après :
- une homogénéité de la répartition, y compris sur des parois obliques ou verticales du flux air-gaz introduit, qui est assuré par l'enceinte répartiteur 1,
- une uniformité de la distribution du flux ainsi réparti à travers l'enceinte de diffusion 2 puis l'enceinte écran 3,
- une régularité totale de la mince couche de flux air-gaz entrant en combustion à la sortie des perforations de la surface externe de l'enceinte d'émission infrarouge 4 et en conséquence un rougissement équilibré de chaque joint de cette surface d'émission,
- une surexcitation thermique de l'enceinte d'émission 4 par l'enceinte de confinement 5 qui a son tour devient une surface auxiliaire de valorisation de l'émission infrarouge de l'enceinte 4,
- une efficacité de l'air secondaire de convection participant à la combustion dans l'espace compris entre les enceintes 4 et 5 ; en effet, l'air secondaire de convection, autour de la surface d'émission infrarouge 4, rencontre non seulement un milieu porté à haute température (900° C), mais bénéficie à cette température d'une surface de contact de combustion supérieure de 20 à 25 % à celle des surfaces émettrices de l'art antérieur,
- un spectre électro-magnétique de rayonnement infrarouge émis par les surfaces réfractaires ainsi agencées, dont les longueurs d'ondes recherchées dans les applications soient celles contenues dans l'infrarouge dit "proche " reçu du soleil,
- un rendement de rayonnement (puissance rayonnée / puissance nominale en %) pouvant atteindre 70 %.

La description détaillée des modes préférés, mais non limitatif de réalisation en feuilles perforées de métal réfractaire s'appuie sur le dessin en coupe de la figure 1. Dans le mode ici décrit, un tube 7 conduit de haut en bas le flux du mélange air-gaz vers l'intérieur d'une série de cinq enceintes 1, 2, 3, 4, 5, en forme de cône en tôles minces réfractaires et perforées, emboîtées les unes dans les autres, sommet vers le bas.
Ce tube 7 est alors solidaire d'un plateau supérieur 6, composé pour des raisons de construction, de deux éléments solidaires 6a et 6b. Le tube débouche sous le plateau 6a par un trou central, pratiqué dans ce plateau, de même diamètre que celui du tube. La jonction tube-plateau est étanche.
Il sera décrit plus loin l'agencement du tube 7 dans les géométries où celui-ci conduit de bas en haut le flux du mélange air-gaz vers la série des cinq enceintes déjà mentionnées.
Dans le mode décrit comme dans toutes les autres versions exposées plus loin, les cinq enceintes 1, 2, 3, 4, 5 sont fixées par leur base et concentriquement au plateau circulaire 6.

Relativement à l'enceinte 1 : c'est le répartiteur du flux air-gaz entrant par le tube 7. Cette enceinte 1 doit répondre aux caractéristiques suivantes :
. sa base concentrique au débouché du tube s'appuie contre le plateau 6 sur tout son périmètre;
. sa hauteur occupe la totalité de la distance disponible entre le plateau 6 et le sommet des enceintes emboîtées comme décrit plus loin ;
. sa surface de révolution, perforée, est déterminée par son diamètre à la base et la hauteur ci-dessus mentionnée ;
. son diamètre à la base est déterminé en fonction de l'angle au sommet recherché pour que le flux air-gaz passant à travers les perforations se répartisse de façon uniforme, en quantité et en direction, vers la paroi interne de l'enceinte de diffusion 2 ;
. le pourcentage de perforation est déterminé en fonction :
   - du débit nominal du flux air-gaz nécessaire,
   - d'un freinage minimal de la vitesse de ce flux pour lui permettre d'atteindre dans les meilleures conditions d'énergie cinétique la face interne de l'enceinte de diffusion 2.
. d'autre part, le diamètre des perforations de l'enceinte 1 ne doit constituer aucune gêne pour le passage de la poussière admise avec le flux air (primaire) - gaz et doit donc être suffisant pour ne pas risquer une accumulation piégée des poussières aspirées.
Dans le mode de réalisation décrit, mais non limitatif, le résultat recherché est obtenu avec un répartiteur dont les caractéristiques sont les ordres de grandeur suivants :
pour un diamètre du tube d'arrivée du flux air-gaz de section S1 :
   - la section S2 de la base du répartiteur 1 est S2 = S1 x 6, avec une fourchette de S 1 x 4 à S1 x6;
   - l'angle au sommet est de 60° ;
pour une surface de révolution S3 de l'enceinte de diffusion 2 :
   - la surface de révolution S4 du répartiteur 1 est S4 = S3 x 1/4 avec une fourchette de S3 x 1/4 à S3 x 1/5 ;
et pour la surface de révolution S4 du répartiteur 1, le pourcentage de perforation est de S4 x 40 % avec des trous de diamètre de 2 mm et dans une fourchette de 3 à 3,5 mm² de section unitaire.
Cette enceinte de répartition 1 n'est jamais en contact par sa face externe avec le mélange enflammé. Contrairement au cône intérieur solidaire du tube, décrit dans le document EP 0382286 au nom du déposant, il ne remplit pas la même fonction. C'est pourquoi, la taille du diamètre des perforations du répartiteur 1 peut être très sensiblement plus grande afin de ne pas être un obstacle au libre passage des poussières de l'air ambiant et d'un flux en très basse pression.
Il faut noter aussi que l'espace intérieur compris entre le répartiteur 1 et l'enceinte de diffusion 2 est une zone "froide". Ce qui présente l'avantage d'une température modérée du flux air-gaz et donc d'une densité non perturbée, ainsi que d'une température du plateau 6 sensiblement plus basse que celle, très élevée de la surface 4 d'émission infrarouge.
De ce fait, le tube 7 d'arrivée du flux air-gaz et, en amont, les composants classiques tels que venturi, buse d'entrée d'air primaire, porte injecteur, injecteur, valve de sécurité etc. .. n'ont pas à souffrir, par conduction, d'une chaleur élevée.

Relativement à l'enceinte 2 : c'est l'enceinte de diffusion du flux air-gaz reçu de façon homogène en quantité et direction du répartiteur 1.
C'est aussi une barrière anti-retour de flamme (prise de feu à l'injecteur et combustion interne).
. Les orifices selon lesquels cette enceinte est ajourée ont, dans cette optique une section unitaire comprise entre 0,50 et 0,70 mm². En effet, la faible vitesse d'éjection du flux air-gaz diffusé à travers ces orifices rend imprudent une section plus importante au regard de la fonction anti-retour de flamme.
. Dans une autre optique, dont il doit être tenu compte, ces orifices doivent avoir une section minimale de 0,50 mm2: en effet, cette enceinte 2 assurant aussi, comme indiqué précédemment, une première pyrolyse des poussières d'ambiance grâce à sa température de l'ordre de 700° C, il convient de contre-carrer la propension des cendres minérales des poussières pyrolysées à s'agréger au pourtour des orifices. Une section unitaire trop faible de ces orifices, d'une part, gênerait l'élimination de ces cendres, et de l'autre, diminuerait l'efficacité de la fonction de diffusion.
. La fonction anti-retour de flamme de cette enceinte 2 conduit par ailleurs à une fixation étanche de la base de cette enceinte 2 au plateau supérieur 6 et à la même étanchéité au niveau des sutures de mise en forme de sa paroi de révolution.
. Enfin : sur le plan du ratio de surface de révolution de l'enceinte 2 par rapport à l'enceinte de répartition 1, la construction doit être telle que :
Surface de l'enceinte 2 = surface de l'enceinte 1 x 4 avec une fourchette de 1 x 4 à 1 x 5.
Sur le plan du ratio de la surface ajourée:
Surface ajourée de l'enceinte 2 = surface ajourée de l'enceinte 1 x 2,5 avec une fourchette de 1 x 2 à 1 x 3.

Relativement à l'enceinte 3 : c'est l'enceinte de protection thermique et de premier confinement intercalée entre l'enceinte 2 de diffusion et de barrière anti-retour de flamme et l'enceinte 4 d'émission infrarouge. Il faut noter que l'enceinte 4 ayant comme décrit plus loin, une surface ajourée identique à celle de l'enceinte 2, se comporte elle-même comme une première barrière anti-retour de flamme mais d'une sécurité insuffisante en raison de sa haute température. L'interposition de l'enceinte 3 entre les deux enceintes 4 et 2, multiplie la sécurité anti-retour de flamme en abaissant la température de l'enceinte 2 à environ 700° C maximum.
- Par contre, elle contribue à élever la température d'émission de l'enceinte 4, l'espace entre les enceintes 3 et 4 étant le siège d'un effet en retour de la chaleur de l'enceinte 4, ce qui augmente le pouvoir émissif de cette dernière.
L'utilité de cette enceinte 3 de précaution en protection thermique de l'enceinte 2, croît avec la diminution de la pression nominale du gaz devant alimenter l'émetteur objet de la présente description. Plus la vitesse de diffusion est faible, plus le risque de retour de flamme sur une enceinte 2, trop chaude et non protégée, augmente.
Cette utilité croît aussi et surtout lorsque l'émetteur est utilisé dans un environnement sujet à des courants d'air.
L'action mécanique de ces perturbations de l'air extérieur est en mesure de provoquer, sans la paroi de protection 3, un souffle rabattant capable de traverser la paroi de l'enceinte 2 et de provoquer ainsi une combustion interne.
En résumé,
. si la pression du gaz est suffisante et si l'environnement est une ambiance parfaitement stable il peut être envisagé de ne pas disposer une enceinte 3 entre-les enceintes 2 et 4.
. si les conditions de pression et d'environnement indiquées ci-dessus ne sont pas fermement assurées, il est contre-indiqué de ne pas prévoir l'enceinte 3 de protection thermique et de premier confinement.
Les dimensions de l'enceinte de protection 3 sont identiques à celles de l'enceinte 2. Par contre, sa paroi est ajourée selon un pourcentage de vide 1,2 à 1,6 fois plus important que celui de la paroi de l'enceinte 2 de diffusion. Dans le mode de réalisation décrit, les parties vides de l'enceinte 3 sont des perforations d'un diamètre de 2 mm avec une fourchette de section élémentaire de l'ordre de 3 à 4 mm², soit de section nettement plus importante que les perforations de l'enceinte de diffusion 2 qui sont de 0,8 mm. Ceci, dans le but de ne pas freiner sensiblement le passage du flux air-gaz vers l'enceinte 4 d'émission infrarouge.
Cette enceinte 3 ne requiert pas la nécessité d'un assujettissement "étanche" au plateau supérieur et à ses sutures. Toutefois dans le mode de réalisation décrit, il est serti au plateau supérieur entre les bords des enceintes 2 et 4 pour des commodités de fabrication. L'espacement entre les parois des enceintes 2, 3 et 4 doit être régulier. Cet écartement est limité en raison de la faible pression du gaz qui n'induit qu'une mince couche dynamique du flux air-gaz appelé à traverser les trois parois des enceintes 2, 3, 4. Pour une pression du gaz de 20 à 30 mbar, un bon écartement de ces trois enceintes s'établit autour de 1,5 mm.
La régularité de cet espacement entre les parois peut être obtenue comme dans le mode décrit, par des nervures en relief 8 embouties sur ces parois. L'emboîtement des enceintes l'une dans l'autre s'arrête au niveau du contact du relief des nervures, la hauteur de ce relief étant calculée pour ménager la valeur désirée de l'écartement entre les parois. Il va de soi que tout autre moyen équivalent peut être utilisé à cet effet. L'intérêt des nervures en relief et couronnes horizontales successives, telles qu'elles sont représentées sur la figure 1, est d'assurer sur le plan de la construction de l'appareil une rigidité des parois bien adaptée aux hautes températures auxquelles l'appareil est soumis. Ainsi sont évitées toutes distorsions et déformations, sans obscurcir l'émission lumineuse aux lignes de contact des reliefs.

Relativement à l'enceinte 4 : c'est l'enceinte de combustion et d'émission infrarouge. Elle est identique à l'enceinte de diffusion 2, tant par ses dimensions et ses nervures que par le pourcentage de vide selon lequel elle est ajourée. La section unitaire des orifices ajourés est également identique et comprise entre 0,50 et 0,70 mm². Aux deux fonctions déjà décrites pour l'enceinte 2 de barrière anti-retour de flamme et de passage des cendres des poussières ambiantes aspirées avec l'air primaire du flux air-gaz s'ajoute celle de l'obtention d'une multitude de points de combustion correspondant aux caractéristiques dimensionnelles de l'émetteur.
Lors de l'allumage de l'appareil, la finesse et la couleur bleue-violette de la nappe de combustion du flux air-gaz qui naît au ras de la surface externe de cette enceinte de combustion 4 montrent que sont réunies les conditions idéales d'une bonne carburation, régulière en tous points. Rapidement, est généré le rougissement de la surface de cette enceinte 4 en raison de sa constitution de faible inertie.
L'émission infrarouge qui en résulte bénéficie en conséquence des mêmes régularité et homogénéité de surface.
La fixation de cette enceinte 4, emboîtée sur l'enceinte 3 doit répondre aux mêmes exigences "d'étanchéité" que l'enceinte 2, pour les mêmes raisons, la traversée de sa paroi par le flux air-gaz avant son inflammation ne devant s'effectuer exclusivement que par les jours calibrés de toute sa surface. La température de cette enceinte (4) étant particulièrement élevée, et la pression basse, aucune fissure parasite de taille supérieure aux jours calibrés, que ce soit en longueur ou en largeur, ne peut être acceptée. C'est pourquoi, cette enceinte 4 d'émission infrarouge est également sertie au plateau supérieur et ses sutures de construction soigneusement fermées.
Les nervures en relief, embouties sur ses parois sont identiques à celles des enceintes 3 et 2 et remplissent les mêmes fonctions de maintien de l'espacement avec l'enceinte 3 et de non déformation à la chaleur.

Relativement à l'enceinte 5 : c'est à l'extérieur, la dernière enceinte dite de second confinement et d'amplification de l'émission infrarouge.
Il existe dans le document EP 0 382 286 au nom du déposant une enceinte identique, dans sa forme, mais non dans sa fonction. Dans le document EP 0 382 286, il n'est mis en oeuvre que deux enceintes coniques :
l'une de diffusion, de forme et de fonction différentes de celles de la présente description, est chargée de projeter à distance et à haute ou moyenne pression le flux air-gaz,
l'autre, semblable à l'enceinte 5 de la présente description, est en mesure, en raison de la pression suffisante, de recevoir à distance le flux air-gaz enflammé et de produire directement la totalité de l'émission infrarouge nominale sur sa seule paroi.
Le brevet à deux enceintes cité ci-dessus n'est donc pas adapté au problème posé par de très basses pressions nominales, les conditions de combustion et de rayonnement étant dégradées par l'insuffisance de la vitesse de projection du flux air-gaz, qui, dans le cas de ce brevet, est enflammé entre les deux enceintes, ce qui n'est pas le cas dans la présente invention.
Dans la présente invention au contraire, cette dernière enceinte peut non seulement récupérer, comme dans l'art antérieur, une partie de la chaleur non rayonnante qui serait perdue en avant de la plaque ou de la résille d'émission infra-rouge, mais ce qui est nouveau, cette enceinte 5 par ses caractéristiques particulières de construction et de positionnement peut remplir aussi une fonction de confinement permettant une récupération maximale de la chaleur qui serait perdue, ce confinement étant conçu pour ne pas affecter la qualité de combustion à la surface externe de l'enceinte d'émission infrarouge 4. Ces conditions spécifiques de confinement réalisées par l'enceinte 5 et positionnée comme décrit ci-dessous, amplifie fortement la température entre les enceintes 4 et 5. L'effet obtenu est un raccourcissement des longueurs d'ondes de l'émission infrarouge entraînant une élévation de la fréquence électro-magnétique. Cette surexcitation électro-magnétique augmente à son tour le niveau d'énergie infrarouge échangée en permanence, de l'une à l'autre et vice-versa, par les parois de ces deux enceintes parallèles en tous points.
Pour obtenir cette synergie des deux enceintes 4 et 5, la présente conception prévoit donc la combinaison des deux paramètres ci-après :
. la surface ajourée de la paroi 5 ne dépasse pas de 1,6 fois la surface ajourée de la paroi 4 avec une fourchette de 1,2 à 1,6 ;
. l'écartement de ces deux parois est ajustable en fonction de la valeur de la pression d'alimentation en gaz. Ceci, dans le but de donner à l'espacement entre ces deux enceintes 4 et 5 la valeur adaptée au volume de confinement optimal qui peut être plus grand si la pression en gaz est plus élevée. A titre indicatif, dans le mode décrit, pour une pression comprise entre 20 et 30 mbar, cet écartement et de l'ordre de 8 mm.
Un écartement figé par construction provoquerait pour des pressions non en rapport avec cet écartement, un frétillement sonore parasite, alors que le présent émetteur selon l'invention est parfaitement silencieux. L'assujettissement de cette dernière enceinte 5 peut être obtenu, comme dans le mode décrit, par des pattes de fixation 9 au plateau supérieur 6b de hauteur ajustable, en fonction du modèle d'appareil et selon la pression de gaz nominale à laquelle il est destiné. Enfin, comme pour les autres enceintes des nervures en relief embouti ou tout autre type de raidissement empêchent toute déformation à haute température.

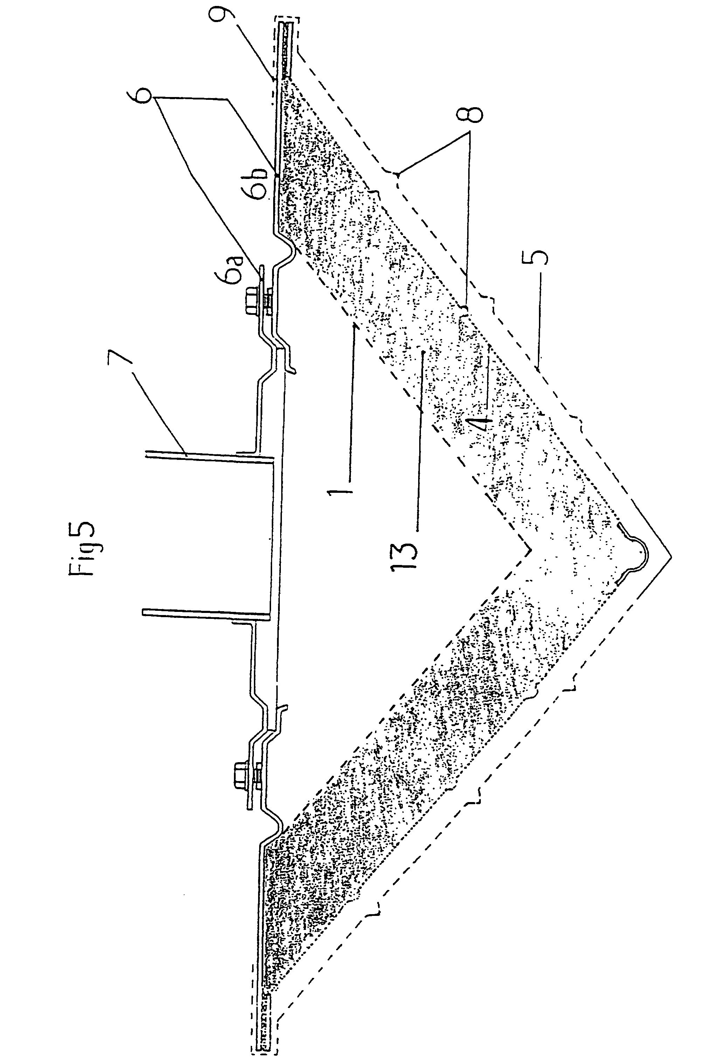

La description détaillée du mode de réalisation qui précède, n'est pas limitative, tant en ce qui concerne les moyens matériels d'assurer les fonctions des enceintes 2 et 3 qu'en ce qui concerne d'autres géométries de l'émetteur selon les applications choisies. Un moyen équivalent en effet peut être utilisé pour assurer les fonctions :
a) de l'enceinte 2 :
   - diffusion du flux air-gaz,
   - barrière anti-retour de flamme,
   - protection contre les courants d'air ;
b) de l'enceinte 3 :
   - protection thermique,
   - premier confinement côté interne de l'enceinte 4,
   - protection contre les courants d'air.
Ces fonctions peuvent être efficacement remplies par l'agencement entre les enceintes 1 et 4 d'un matelas perméable 13 de fibres réfractaires, comme représenté sur la figure 5, comme par exemple, de la laine d'alliage métallique inoxydable, réfractaire et non poreux. Ce matelas est alors tassé de façon appropriée entre les enceintes 1 et 4. L'emploi de ce moyen au lieu et place de ces enceintes 2 et 3 est particulièrement économique, la fabrication industrielle en bande de cette filasse métallique inoxydable et réfractaire relevant de procédés classiques.
Dans le cas d'emploi de ce matelas 13, les caractéristiques dimensionnelles de l'enceinte 1 de répartition peuvent être moins rigoureuses que celles décrites précédemment, et il peut être avantageux d'agrandir la surface de révolution de la dite enceinte 1 de façon à limiter l'épaisseur du matelas 13 s'appuyant entre cette enceinte 1 et l'enceinte 4, à une valeur suffisante pour qu'il assure les fonctions déjà décrites, des enceintes 2 et 3 auxquelles il est substitué.
La surface de révolution de l'enceinte 1 peut être portée à un rapport de grandeur de 3/6 à 5/6 avec la surface de révolution de l'enceinte 4.
La surface ajourée de l'enceinte 1 peut alors être limitée à 30 % au lieu de 40% avec des orifices élémentaires restant de l'ordre de 3 à 3,5 mm² de section unitaire.
L'expérience montre qu'un émetteur selon l'invention, réalisé avec ce moyen équivalent à la conjonction des enceintes 2 et 3, possède les mêmes qualités de combustion, de rayonnement, de protection anti-combustion interne, de résistance au vent et de silence. En ce qui concerne d'autres géométries de l'émetteur, elles peuvent êtres réalisées suivant les critères fondamentaux de l'invention.

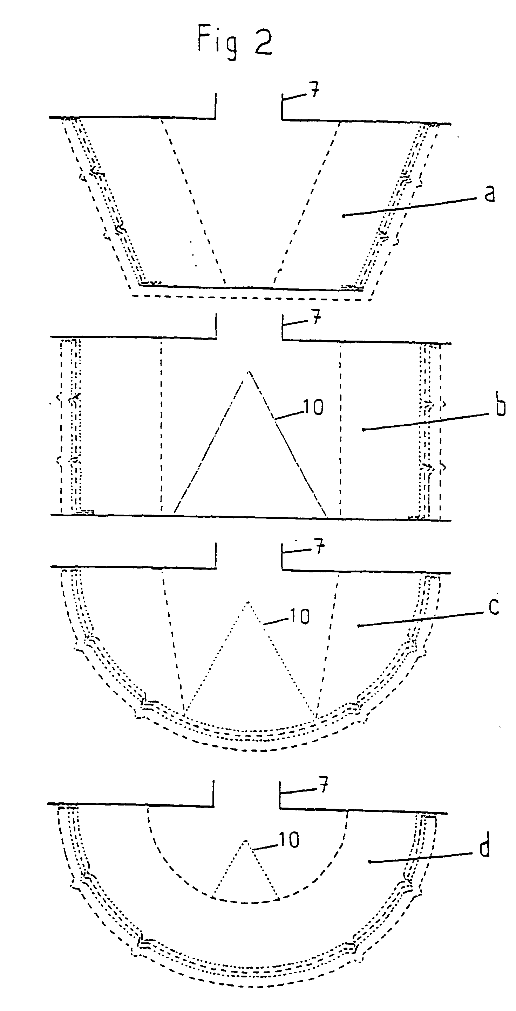

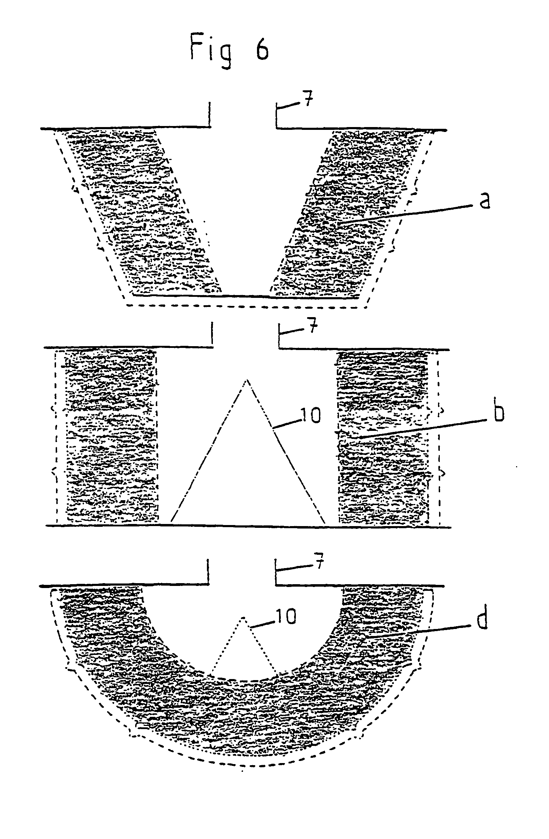

A titre d'exemple, on peut citer des géométries diverses se prêtant bien à la conception même de l'appareil aussi bien dans le cas où l'embouchure 7 conduit le flux air-gaz de haut en bas que dans celui où elle le conduit de bas en haut :
a) Pour les géométries conduisant le flux air-gaz de haut en bas, comme représenté sur les figures :
   - la forme tronconique des enceintes 1, 2, 3, 4, et 5, comme représenté sur la figure 2a, et des enceintes 1, 13, 4 et 5, comme représenté sur la figure 6a, si l'on veut se limiter à un rayonnement oblique ;
   - la forme cylindrique verticale des enceintes 1, 2, 3, 4, et 5 comme représenté sur la figure 2b, ou figure 6b, si l'on veut privilégier un rayonnement horizontal ;
   - la forme hémisphérique, comme représenté sur les figures 2c, 2d, et 6d.

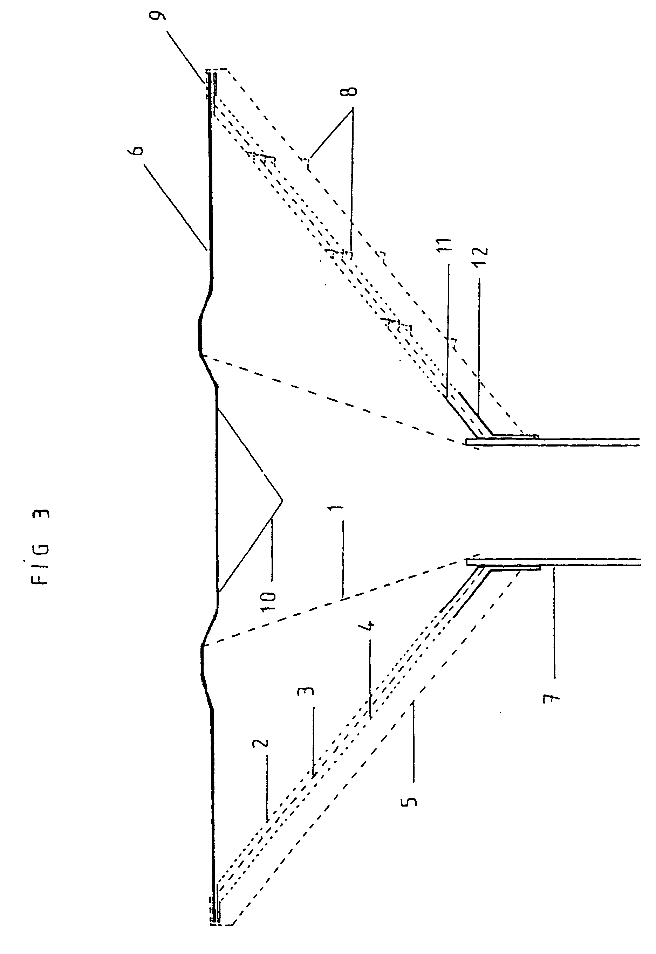

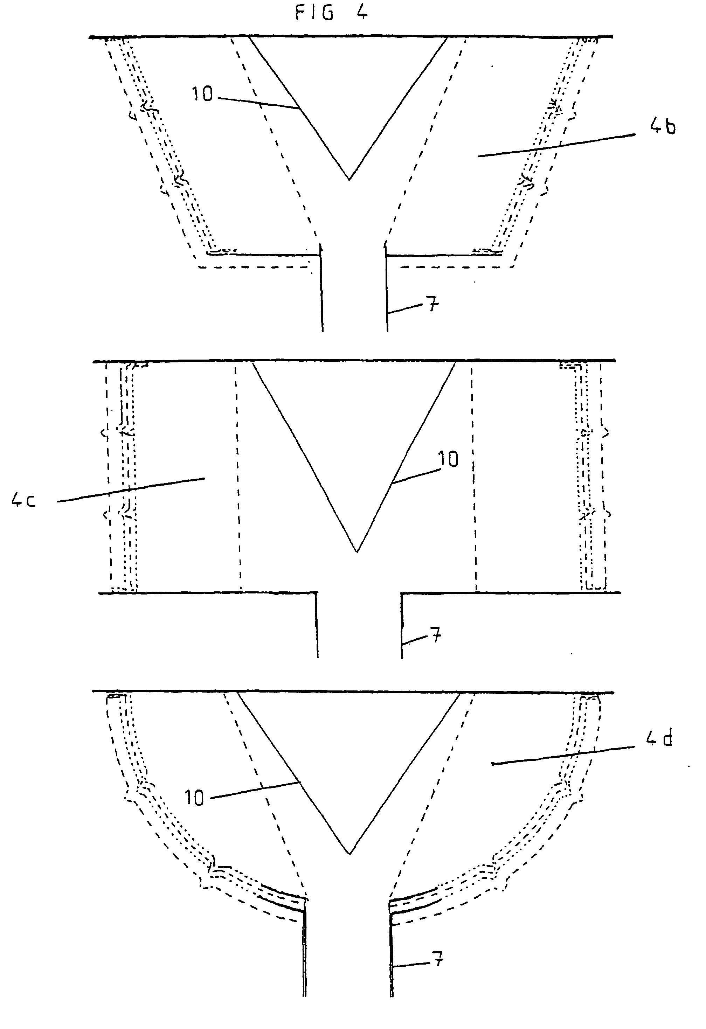

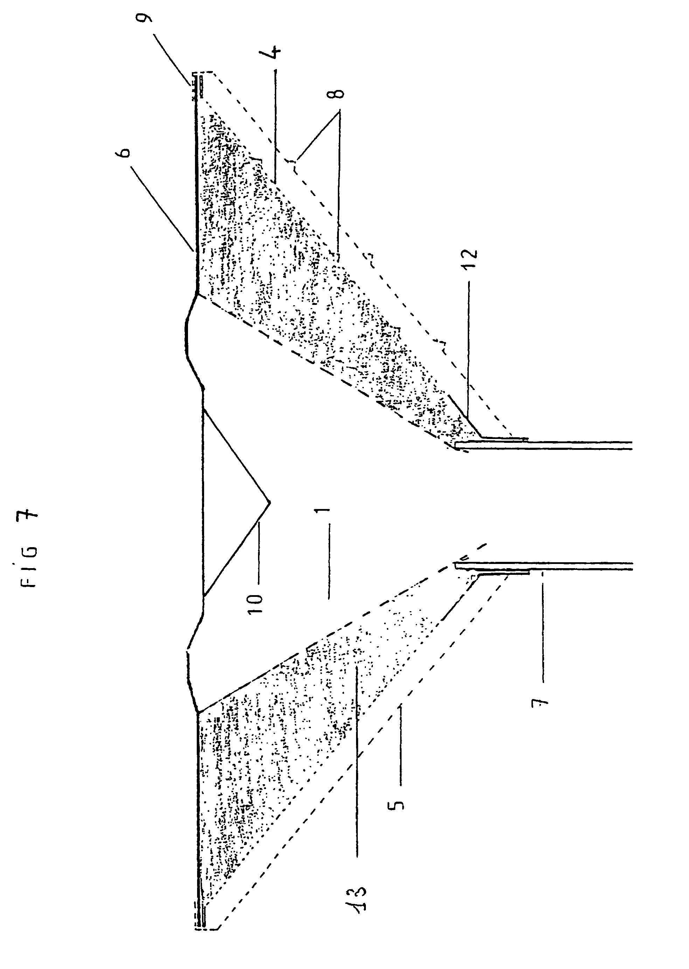

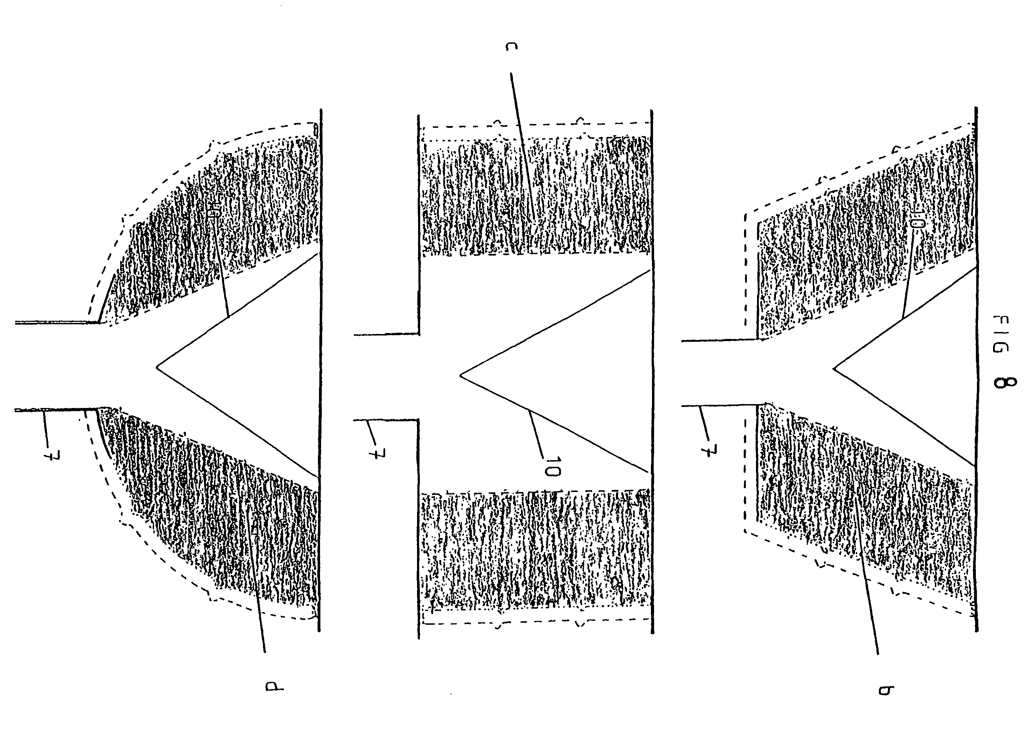

   Dans les géométries selon les figures 2b, 2c et 2d avec des enceintes 1, 2, 3, 4, et 5 verticales (figure 2b) ou hémisphériques (figures 2c et 2d), il est avantageux de prévoir à l'intérieur de l'enceinte de répartition 1 un pré-répartiteur plein 10 ou finement perforé de forme conique inverse pointe vers le haut pour pré-orienter le flux air-gaz de façon uniforme vers l'enceinte de diffusion 2. Il en est de même pour les géométries selon les figures 6b et 6d avec des enceintes 1, 13, 4, 5. Cette combinaison est un moyen donnant un résultat équivalent à celui obtenu directement par le seul répartiteur conique 1 du mode de réalisation décrit plus haut.
b) Pour les géométries conduisant le flux air-gaz de bas en haut :
   - la forme tronconique selon les figures 3 ou 4b des enceintes 1, 2, 3, 4, et 5, et selon les figures 7 et 8b des enceintes 1, 13, 4, et 5 si l'on veut se limiter à un rayonnement oblique.
   - la forme cylindrique verticale selon la figure 4c des enceintes 1, 2, 3, 4, et 5 et selon la figure 8c des enceintes 1, 13, 4, et 5 si l'on veut privilégier un rayonnement horizontal.
   - la forme hémisphérique selon la figure 4d des enceintes 2, 3, 4 et 5 et selon la figure 8d des enceintes 4 et 5 base circulaire en haut et calotte ouverte à la dimension du tube d'embouchure en bas. Dans ces géométries ci-dessus mentionnées selon les figures 3, 4b, 4c, 4d, il est avantageux de prévoir à l'intérieur de l'enceinte de répartition 1, un pré-répartiteur plein 10, de forme conique inverse (pointe vers le bas) pour pré-orienter le flux air-gaz de façon uniforme vers l'enceinte de diffusion 2. La base de ce cône de pré-répartition s'appuie sur la face inférieure de plateau, alors plein en son centre, concentriquement à l'enceinte de répartition 1.
Cette combinaison est un moyen donnant un résultat équivalent à celui obtenu directement par le seul répartiteur conique 1 de la figure 1 correspondant au mode de réalisation décrit plus haut. Par ailleurs, dans ces configurations du type des figures 3 et 4, le tube d'embouchure centrale 7 est solidarisé aux enceintes 2 et 4 par des moyens assurant l'étanchéité de jonction entre les dites enceintes 2 et 4 et l'embouchure 7, comme par exemple, le moyen représenté sur la figure 3, c'est à dire deux tulipes creuses 11 et 12, dont la partie évasée en corolle de chacune d'elles est soigneusement suturée à sa jonction respective avec la bordure inférieure de la paroi ajourée de chacune des enceintes 2 et 4. Ces deux tulipes sont donc emboîtées l'une dans l'autre, les corolles respectant l'espacement décrit plus haut entre ces deux enceintes.
Les parties respectives tubulaires et cylindriques de chacune des ces deux tulipes sont par contre parfaitement jointives dans cet emboîtement. La jonction et la solidarisation avec l'embouchure 7 doit répondre aux mêmes conditions d'étanchéité. Dans le cas des configurations selon les figures 7 et 8d des enceintes 1, 13, 4 et 5, une seule tulipe suffit.

En résumé, sous de nombreux aspects, l'émetteur infrarouge selon l'invention, pour fonctionnement en très basse pression présente des avantages parmi lesquelles on peut citer :
- une plage de longueur d'ondes électro-magnétiques le positionnant au milieu du spectre de chaleur utile du soleil pour le bien-être des êtres vivants ;
- un rendement de rayonnement de l'ordre de 70 % ;
- une résistance au vent lui permettant d'accepter, sans extinction, des courants d'air de plus de 2 mètres/ seconde ;
- Il est dépoussiérable à l'air et ne craint pas des jets de pression d'air comprimé de 7 à 8 bars, contrairement aux appareils à plaques céramique sur lesquels il est recommandé de ne pas dépasser 2 bars ;
- Il est également lavable à l'eau puisque réalisé en matériau inoxydable et non poreux ;
- Il est facile à installer, sans infrastructure lourde de suspension ou de surélévation, en raison de son faible poids par rapport à sa puissance calorifique.
Ces différents aspects expliquent d'eux-mêmes le caractère économique de cet émetteur de chauffage infrarouge à gaz conçu pour accepter sans handicap une alimentation en gaz à très basse pression sans recours à un dispositif électro-mécanique de propulsion du mélange air-gaz.

## Revendications

1. Émetteur infrarouge à rayonnement lumineux comprenant :
- une alimentation en gaz à très basse pression et en air primaire atmosphérique par venturi, ladite alimentation comportant au moins un injecteur gaz, un porte-injecteur, une valve de sécurité, un raccord d'alimentation en gaz, notamment pour des appareils de chauffage surélevés pour le chauffage directionnel vers le sol et/ou sur les côtés dans les secteurs agricoles, industriels, artisanaux et tertiaires,
- une structure géométrique comportant de manière concentrique, au moins une première (1) enceinte de répartition, une deuxième enceinte (13) de diffusion et de barrière anti-retour de flamme, de protection thermique et de premier confinement, une troisième (4) enceinte de combustion et d'émission infrarouge, une quatrième (5) enceinte d'amplification et de second confinement,
- un plateau supérieur (6) sensiblement horizontal sous lequel lesdites au moins première (1), deuxième (13), troisième (4), quatrième (5) enceintes sont fixées concentriquement au dit plateau, emboîtées l'une dans l'autre,
- une embouchure centrale (7) amenant le flux air-gaz perpendiculairement au dit plateau, dans l'espace intérieur créé par la première enceinte (1).

2. Émetteur suivant la revendication 1, **caractérisé en ce que** ladite deuxième enceinte est divisée en une deuxième enceinte (2) de diffusion et de barrière anti-retour de flamme et en une cinquième enceinte (3) de protection thermique et de premier confinement également concentrique pouvant être intercalée entre les deuxième (2) et troisième (4) enceintes selon les conditions de pression d'alimentation en gaz et l'instabilité de l'air ambiant de l'environnement.

3. Émetteur suivant la revendication 1, **caractérisé en ce que** lesdites première (1), deuxième (13), troisième (4), quatrième (5) enceintes présentent en surface de révolution sur 360°, des parois latérales, obliques, verticales ou hémisphériques, en matériau, réfractaire, inoxydable, perméable, non poreux et rougissant à la chaleur.

4. Émetteur suivant l'une quelconque des revendications 1 à 3, **caractérisé en ce qu'**il comprend une alimentation du flux air-gaz dirigée de haut en bas, et une embouchure centrale (7) solidaire dudit plateau supérieur, alors ouvert en son centre, étanche avec lui, amenant le flux air-gaz perpendiculairement au dit plateau, par l'ouverture centrale de celui-ci dans l'espace intérieur créé par la première enceinte (1).

5. Émetteur suivant l'une quelconque des revendications 1 à 3, **caractérisé en ce qu'**il comprend une alimentation du flux air-gaz dirigée de bas en haut, et une embouchure centrale (7) jointive avec les deuxième (2, 13) et troisième (4) enceintes, et amenant le flux air-gaz perpendiculairement au plateau supérieur alors plein en son centre dans l'espace intérieur créé par la première enceinte (1).

6. Émetteur selon la revendication 2, **caractérisé en ce que**, les première (1), deuxième (2), troisième (4), quatrième (5), cinquième (3) enceintes sont ajourées et possèdent des caractéristiques spécifiques propres à leur(s) fonction(s) respective(s) :
. la première enceinte (1) dite de répartition présentant suivant les géométries de réalisation choisie :
- une section de sa base fixée au plateau supérieur (6) en rapport de grandeur de 4 à 6 avec la section de l'embouchure (7),
- une surface de révolution en rapport de grandeur de 1/4 à 1/5 avec la surface de révolution de la deuxième enceinte (2) suivante,
- un pourcentage de surface ajourée par rapport à la surface totale de l'ordre de 40 % avec des orifices élémentaires de l'ordre de 3 à 3,5 mm² de section unitaire,
. la deuxième enceinte (2) dite de diffusion et de seconde barrière anti-retour de flamme présentant suivant les dimensions et les géométries de réalisation :
- une surface de révolution en rapport de grandeur de 4 à 5 avec l'enceinte de répartition (1),
- une surface totale des parties ajourées en rapport de grandeur 2 à 3 avec la surface totale des parties ajourées de l'enceinte de répartition (1),
- une section élémentaire de 0,50 à 0,70 mm² pour chacun des orifices constituant la partie ajourée,
- un mode de fixation assurant l'étanchéité de jonction avec le plateau supérieur (6),
. la cinquième enceinte (3) dite de protection thermique et de premier confinement présentant: suivant les dimensions et les géométries de réalisation :
- une surface de révolution sensiblement identique à celle de la deuxième enceinte (2),
- une surface totale des parties ajourées en rapport de grandeur de 1,2 à 1,6 avec la surface totale des parties ajourées de l'enceinte de diffusion (2),
- une section élémentaire de l'ordre de 3 à 4 mm² pour chacun des orifices de surfaces ajourées,
. la troisième enceinte (4) dite d'émission infrarouge et de première barrière anti-retour de flamme présentant pour toutes ses caractéristiques une identité sensible avec la deuxième enceinte (2), y compris un mode de fixation assurant l'étanchéité de jonction avec le plateau supérieur,
. la quatrième enceinte (5) dite de second confinement et d'amplification par excitation de l'émission électromagnétique de la troisième enceinte (4) comportant :
- une surface totale ajourée dans un rapport de grandeur se limitant à une valeur de 1,2 à 1,6 fois la surface totale ajourée de l'enceinte d'émission (4),
- un espacement avec la troisième enceinte (4) ajustable en fonction de la pression d'alimentation en gaz,
- des pattes de fixation ajustables (9).

7. Émetteur selon la revendication 2, **caractérisé en ce que :**
- les parois latérales des deuxième (2), cinquième (3), et troisième (4) enceintes sont tenues espacées par des moyens d'écartement tels que des nervures en relief pratiquées sur ces enceintes, les tenant à une distance contrôlée les unes des autres et leur servant de raidisseurs anti-déformation à la chaleur sans obscurcir l'émission lumineuse aux lignes de contact des reliefs, cette distance d'écartement étant d'ailleurs limitée au passage d'une mince couche de flux dynamique se frayant un passage à travers les orifices des parois ajourées spécifiques des deuxième (2) et cinquième (3) enceintes d'une part, des cinquième (3) et troisième (4) enceintes d'autre part.

8. Émetteur selon la revendication 3, **caractérisé en ce que** la deuxième enceinte (13) comprend un matelas perméable de fibres réfractaires, inoxydables, et non poreuses, intercalé entre la première enceinte (1) et la troisième enceinte (4), et
**en ce que** les caractéristiques dimensionnelles de la première enceinte (1) peuvent être :
. portées à une surface de révolution en rapport de grandeur de l'ordre 3/6 à 5/6 avec la surface de révolution de la troisième enceinte (4),
. ramenées alors à une surface ajourée de 30 %,
. maintenues avec des orifices élémentaires de 3 à 3,5 mm² de section unitaire,
. les caractéristiques dimensionnelles et fonctionnelles des troisième (4) et quatrième enceintes (5) restent identiques par rapport au choix de réalisation comportant en conjonction les deuxième (2) et cinquième (3) enceintes.

9. Émetteur selon la revendication 4, **caractérisé en ce que** sa structure géométrique peut revêtir des formes diverses telles que :
- la forme conique, base vers le haut des première (1), deuxième (2), troisième (4), quatrième (5) et cinquième (3) enceintes,
- la forme tronconique, grande base vers le haut des première (1), deuxième (2), troisième (4), quatrième (5) et cinquième (3) enceintes, ou des première (1), deuxième (13), troisième (4), et quatrième (5) enceintes,
- la forme cylindrique si l'on désire une surface émettrice de révolution verticale,
- la forme hémisphérique, section circulaire vers le haut

10. Émetteur selon la revendication 9, **caractérisé en ce que** l'enceinte de répartition (1) dans sa forme tronconique, cylindrique, ou hémisphérique, comporte dans son volume interne, selon l'axe vertical central de symétrie, un cône plein (10) ou très finement perforé, sommet vers le haut au débouché de l'arrivée du flux air-gaz, donnant ainsi en combinaison avec la première enceinte (1) dans les formes ci-dessus un moyen équivalent de parfaite répartition du flux air-gaz, à celui obtenu directement avec la première enceinte (1), sommet vers le bas de la forme conique.

11. Émetteur selon la revendication 5, **caractérisé en ce que** sa structure géométrique peut revêtir des formes diverses et en particulier telles que :
- la forme tronconique grande base vers le haut des enceintes,
- la forme cylindrique si l'on désire une surface émettrice de révolution verticale,
- la forme hémisphérique, base de section circulaire vers le haut

12. Émetteur selon la revendication 11, **caractérisé en ce que** l'enceinte de répartition (1), pour les formes tronconique, cylindrique, ou hémisphérique, comporte dans son volume interne, selon l'axe vertical central de symétrie un cône plein (10) de pré-répartition, base contre le plateau et sommet vers le bas au débouché de l'arrivée du flux air-gaz, devenant ainsi en combinaison avec la première enceinte (1) dans les formes ci-dessus un moyen de parfaite répartition du flux air-gaz.

13. Émetteur selon l'une quelconque des revendications précédentes, **caractérisé en ce que :**
- un espacement ajustable est agencé entre les troisième (4) et quatrième (5) enceintes pour un fonctionnement parfaitement silencieux,
- une grande résistance au vent à très basse pression est obtenue :
. dans le choix de réalisation comportant en conjonction les deuxième (2) et cinquième (3) enceintes, par la combinaison à faible écartement des deuxième (2), cinquième (3), et troisième (4) enceintes, et par l'alternance des diamètres des orifices et de la proportion entre elles des surfaces ajourées de ces trois enceintes,
. dans le choix de réalisation comportant la deuxième enceinte (13) au lieu et place des deuxième (2) et cinquième (3) enceintes, par la juxtaposition contre la face interne de la troisième enceinte (4) à faible diamètre des orifices de sa surface ajourée, de la structure fibreuse en tampon de la deuxième enceinte (13), l'ensemble se comportant en amortisseur efficace des brusques mouvements d'air.

14. Émetteur selon l'une quelconque des revendications précédentes, **caractérisé en ce que** la surface de combustion (Sc) est comprise entre 32 fois S1 et 60 fois S1, avec S1 égal à la section du tube d'arrivée du flux air-gaz, et de préférence Sc égal à 48 fois S1.

## Claims

1. Infrared emitter with luminous radiation comprising
- a supply of gas at very low pressure and of primary atmospheric air via venturi, said supply comprising at least one gas injector, an injector holder, a safety valve, a gas supply connector, especially for raised heating appliances for directional heating towards the ground and/on the sides in the agricultural, industrial, craft and service sectors,
- a geometrical structure comprising in a concentric manner at least one first (1) distribution enclosure, a second diffusion and flame trap barrier enclosure (13), of thermal protection and first confinement, a third (4) combustion and infrared emission enclosure, a fourth (5) enclosure of amplification and second confinement,
- a substantially horizontal upper plate (6) below which the said at least first (1), second 13), third (4), fourth (5) enclosures are fixed concentrically to said plate, the one fitting inside the other,
- a central opening (7) leading the air-gas flow perpendicularly to said plate, into the interior space created by the first enclosure (1).

2. Emitter according to claim 1, **characterised in that** said second enclosure is divided into a second diffusion and flame trap barrier enclosure (2) and into a fifth enclosure (3) of thermal protection and first confinement, which is also concentric and may be inserted between the second (2) and third (4) enclosures according to the gas supply pressure conditions and the instability of the ambient air of the environment.

3. Emitter according to claim 1, **characterised in that** said first (1), second (13), third (4), fourth (5) enclosures have, on a surface of revolution over 360°, lateral, oblique, vertical or hemispherical walls formed from an inoxidizable refractory material which is permeable and non-porous and which turns red with heat.

4. Emitter according to any one of claims 1 to 3, **characterised in that** it comprises a supply of the air-gas flow directed from the top to the bottom, and an integral central opening (7) in said plate, then open in its centre, airtight with the plate, leading the air-gas flow perpendicularly to said plate via the central opening of the latter into the interior space created by the first enclosure (1).

5. Emitter according to any one of claims 1 to 3, **characterised in that** it comprises a supply of the air-gas flow directed from the bottom to the top and a central opening (7) contiguous with the second (2, 13) and third (4) enclosures and leading the air-gas flow perpendicularly to the upper plate, then full in its centre, into the interior space created by the first enclosure (1).

6. Emitter according to claim 2, **characterised in that** the first (1), second (2), third (4), fourth (5), fifth (3) enclosures are perforated and have specific characteristics appropriate to their respective function(s):
* the first enclosure (1) termed distribution enclosure and having, according to the chosen realisation geometries:
- a cross-section of its base fixed to the upper plate (6) in a size ratio of 4 to 6 with the cross-section of the opening (7),
- a surface of revolution in a size ratio of 1/4 to 1/5 with the surface of revolution of the following second enclosure (2),
- a percentage of perforated surface in relation to the total surface in the order of 40% with basic holes of the order of 3 to 3.5 mm² of unit cross-section,
* the second enclosure (2) termed diffusion and second flame trap barrier enclosure and having, according to the realisation dimensions and geometries:
- a surface of revolution in a size ratio of 4 to 5 with the distribution enclosure (1),
- a total surface of perforated parts in a size ratio of 2 to 3 with the total surface of the perforated parts of the distribution enclosure (1),
- a basic cross-section of 0.50 to 0.70 mm² for each of the holes constituting the perforated portion,
- a manner of fixing which ensures an airtight connection to the upper plate (6),
* the fifth enclosure (3) termed thermal protection and first confinement enclosure and having, according to the realisation dimensions and geometries:
- a surface of revolution substantially identical to that of the second enclosure (2),
- a total surface of the perforated parts in a size ratio of 1.2 to 1.6 with the total surface of the perforated parts of the diffusion enclosure (2),
- a basic cross-section of the order of 3 to 4 mm² for each of the holes of perforated surfaces,
* the third enclosure (4) termed infrared emission and first flame-trap barrier enclosure having for all its characteristics substantial similarity to the second enclosure (2), including a manner of fixing ensuring an airtight connection to the upper plate,
* the fourth enclosure (5) termed second confinement enclosure and enclosure of amplification by excitation of the electromagnetic emission of the third enclosure (4) comprising:
- a total perforated surface in a size ratio limited to a value of 1.2 to 1.6 times the total perforated surface of the emission enclosure (4),
- a spacing from the third enclosure (4) which is adjustable in dependence on the pressure of the gas supply,
- adjustable mounting lugs (9).

7. Emitter according to claim 2, **characterised in that**:
- the lateral walls of the second (2), fifth (3) and third (4) enclosures are kept spaced by spacing means such as raised ribs formed on these enclosures, keeping them at a controlled distance the one from the other and serving them as strengtheners against heat deformation without obscuring the luminous emission at the contact lines of the reliefs, this spacing distance being moreover limited to the passage of a thin layer of dynamic flow making its way through the holes of the specific perforated walls firstly of the second (2) and fifth (3) enclosures, and secondly of the fifth (3) and third (4) enclosures.

8. Emitter according to claim 3, **characterised in that** the second enclosure (13) includes a permeable mat of refractory fibres which are inoxidizable and non-porous, inserted between the first enclosure (1) and the third enclosure (4), and
**in that** the dimensional characteristics of the first enclosure (1) can be:
- taken to a surface of revolution in a size ratio of the order of 3/6 to 5/6 with the surface of revolution of the third enclosure (4),
- reduced then to a perforated surface of 30%,
- kept with basic holes of 3 to 3.5 mm² of unit cross-section,
- the dimensional and functional characteristics of the third (4) and fourth (5) enclosures remain identical in relation to the choice of realisation comprising in conjunction the second (2) and fifth (3) enclosures.

9. Emitter according to claim 4, **characterised in that** its geometrical structure can assume various shapes such as:
- a conical shape, base towards the top of the first (1), second (2), third (4), fourth (5) and fifth (3) enclosures,
- the shape of a truncated cone, large base towards the top of the first (1), second (2), third (4), fourth (5) and fifth (3) enclosures, or the first (1), second (13), third (4), and fourth (5) enclosures,
- a cylindrical shape if a vertical emitting surface of revolution is desired,
- a hemispherical shape, circular cross-section towards the top.

10. Emitter according to claim 9, **characterised in that** the distribution enclosure (1) in its truncated-cone, cylindrical or hemispherical shape, comprises in its internal volume, according to the central vertical axis of symmetry, a solid or very finely perforated cone (10), apex towards the top at the outlet for the arrival of the air-gas flow, thus giving in combination with the first enclosure (1) in the above shapes an equivalent means of perfect distribution of the air-gas flow to that obtained directly with the first enclosure (1), apex towards the bottom of the conical shape.

11. Emitter according to claim 5, **characterised in that** its geometrical structure can assume various shapes and in particular such shapes as:
- the shape of a truncated cone, large base towards the top of the enclosures,
- a cylindrical shape if a vertical emitting surface of revolution is desired,
- a hemispherical shape, base of circular cross-section towards the top.

12. Emitter according to claim 11, **characterised in that** the distribution enclosure (1) for the truncated-cone, cylindrical or hemispherical shapes, comprises in its internal volume, according to the central vertical axis of symmetry, a solid cone (10) of pre-distribution, base against the plate and apex towards the bottom at the outlet for the arrival of the air-gas flow, thus becoming in combination with the first enclosure (1) in the above shapes a means of perfect distribution of the air-gas flow.

13. Emitter according to any one of the preceding claims, **characterised in that**
- an adjustable spacing is arranged between the third (4) and fourth (5) enclosures for perfectly silent operation,
- a great wind resistance at very low pressure is obtained:
• in the choice of realisation comprising in conjunction the second (2) and fifth (3) enclosures, by the combination at a slight spacing of the second (2), fifth (3) and third (4) enclosures, and by the alternation of the diameters of the holes and of the proportion between them of the perforated surfaces of these three enclosures,
• in the choice of realisation comprising the second enclosure (13) instead of and in place of the second (2) and fifth (3) enclosures, by the juxtaposition against the internal face of the third enclosure (4) with holes of small diameter in its perforated surface, of the fibrous buffer structure of the second enclosure (13), the whole behaving as an efficient damper of sudden air movements.

14. Emitter according to any one of the preceding claims, **characterised in that** the combustion surface (Sc) is between 32 times S1 and 60 times S1 with S1 equal to the cross-section of the arrival tube for the air-gas flow and preferably Sc equal to 48 times S1.

## Patentansprüche

1. Lichtstrahlen-Infrarotstrahler mit
- einer Venturi unterstützten Primärluft- und Gasversorgung, letztere unter sehr niedrigem Druck, wobei die Versorgung mindestens einen Gasinjektor, einen Injektor-Träger, ein Sicherheitsventil, einen Gasanschluss enthält, insbesondere für erhöht angebrachte Heizungsgeräte zur auf den Boden und/oder auf die Seiten gerichteten Heizung in der Landwirtschaft, in Gewerbe und Handwerk und im Dienstleistungssektor;
- einer geometrischen Struktur mit mindestens einem ersten Raum (1) für die Verteilung, einem zweiten Raum (13) für die Ausbreitung, als Schranke gegen Flammenrückschlag, zum thermischen Schutz und als erste Einschliessung, einem dritten Raum (4) zur Verbrennung und Ausstrahlung von Infrarotstrahlen, einem vierten Raum (5) zur Verstärkung und als zweite Einschliessung;
- einem oberen; weitestgehend waagerechten Boden (6), unter welchem der mindestens erste (1), der mindestens zweite (13), der mindestens dritte (4) und der mindestens vierte (5) Raum an diesem Boden konzentrisch befestigt und ineinander gesteckt sind;
- einer mittigen Mündung (7) zur Zuführung des Gas-Luft-Flusses senkrecht zum Boden in das von dem ersten Raum (1) definierte Innere.

2. Strahler nach Anspruch 1, **dadurch gekennzeichnet, dass** der zweite Raum in einen zweiten Raum (2) für die Ausbreitung und als Schranke gegen Flammenrückschlag dienenden Raum sowie in einen fünften Raum (3) zum thermischen Schutz und als erste Einschliessung dienenden Raum unterteilt ist, welcher ebenfalls konzentrisch ist und in Abhängigkeit der Druckbedingungen der Gasversorgung und der Instabilität der umgebenden Luft zwischen dem zweiten (2) und dem dritten (4) Raum angeordnet sein kann.

3. Strahler nach Anspruch 1, **dadurch gekennzeichnet, dass** der erste (1), der zweite (13), der dritte (4) und der vierte (5) Raum eine Fläche mit einer 360°-Rotation aufweisen sowie schräge, senkrechte oder halbkugelförmige Seitenflächen aus hitzebeständigem, nicht oxidierendem, durchlässigem, nicht porösem und unter der Hitzeeinwirkung glühendem Material.

4. Strahler nach einem der Ansprüche 1 bis 3, **dadurch gekennzeichnet, dass** er eine von oben nach unten gerichtete Zufuhr des Luft-Gas-Flusses enthält sowie eine mittige Mündung (7), welche mit dem oberen, in diesem Falle eine mittige Öffnung aufweisenden Boden starr und dicht verbunden ist und zur Zuführung des Luft-Gas-Flusses senkrecht zum Boden durch dessen mittige Öffnung in das durch den ersten Raum (1) definierte Innere dient.

5. Strahler nach einem der Ansprüche 1 bis 3, **dadurch gekennzeichnet, dass** er eine von unten nach oben gerichtete Zufuhr des Luft-Gas-Flusses enthält sowie eine mittige Mündung (7), welche an den zweiten (2, 13) und an den dritten (4) Raum stößt und zur Zuführung des Luft-Gas-Flusses senkrecht zum oberen, in diesem Fall in seiner Mitte ganzen Boden in das durch den ersten Raum (1) definierte Innere dient.

6. Strahler nach Anspruch 2, **dadurch gekennzeichnet, dass** der erste (1), der zweite (2), der dritte (4), der vierte (5) und der fünfte (3) Raum durchbrochen sind und spezifische, auf ihre jeweilige(n) Funktion(en) eigens abgestimmte Merkmale aufweisen, wobei
. der erste Raum (1) - der so genannte Verteilungsraum - je nach den ausgewählten Ausgestaltungsgeometrien :
- einen Querschnitt seiner am oberen Boden (6) befestigten Basis in einem Größenverhältnis von 4 bis 6 zum Querschnitt der Mündung (7),
- eine Rotationsfläche in einem Größenverhältnis von 1/4 bis 1/5 zur Rotationsfläche des folgenden zweiten Raums (2),
- einen Prozentsatz der durchbrochenen Fläche in der Größenordnung von 40 % der Gesamtfläche, mit Elementaröffnungen mit einem Einheitsquerschnitt in der Größenordnung von 3 bis 3,5 mm² aufweist;
. der zweite Raum (2) - der so genannte Ausbreitungsraum und als zweite Schranke gegen Flammenrückschlag dienende Raum - in Abhängigkeit der Abmessungen und der Ausgestaltungsgeometrien :
- eine Rotationsfläche in einem Größenverhältnis von 4 bis 5 zum Verteilungsraum (1),
- eine Gesamtfläche der durchbrochenen Teile in einem Größenverhältnis von 2 bis 3 zur Gesamtfläche der durchbrochenen Teile des Verteilungsraums (1),
- einen Elementarquerschnitt von 0,50 bis 0,70 mm² für die jeweiligen Öffnungen des durchbrochenen Teils,
- eine Befestigungsweise zur Sicherstellung der Abdichtung an der Verbindungsstelle mit dem oberen Boden (6) aufweist;
. der fünfte Raum (3) - der so genannte Raum zum thermischen Schutz und als erstes Einschliessung dienender Raum - in Abhängigkeit der Abmessungen und der Ausgestaltungsgeometrien :
- eine Rotationsfläche, welche mit der Rotationsfläche des zweiten Raums (2) weitestgehend identisch ist,
- eine Gesamtfläche der durchbrochenen Teile in einem Größenverhältnis von 1,2 bis 1,6 zur Gesamtfläche der durchbrochenen Teile des Ausbreitungsraums (2),
- einen Elementarquerschnitt in der Größenordnung von 3 bis 4 mm² für die jeweiligen Öffnungen von durchbrochenen Flächen aufweist;
. der dritte Raum (4) - der so genannte Raum zur Ausstrahlung von Infrarotstrahlen und als erste Schranke gegen den Flammenrückschlag dienende Raum - für alle seine Merkmale eine deutliche Identität mit dem zweiten Raum (2) einschließlich einer Befestigungsweise zur Sicherstellung der Abdichtung an der Verbindungsstelle mit dem oberen Boden aufweist;
. der vierte Raum (5) - der so genannte Raum zur Verstärkung durch Erregung der elektromagnetischen Ausstrahlung des dritten Raums (4) und als zweite Einschliessung dienende Raum :
- eine durchbrochene Gesamtfläche, welche in einem Größenverhältnis durchbrochen. ist, das auf einen Wert von 1,2- bis 1,6-mal die durchbrochene Gesamtfläche des Ausstrahlungsraums (4) begrenzt ist,
- eine Beabstandung zum dritten Raum (4), welche in Abhängigkeit des Drucks der Gasversorgung justiert werden kann,
- justierbare Befestigungsanhängsel (9) aufweist.

7. Strahler nach Anspruch 2, **dadurch gekennzeichnet, dass** die Seitenflächen des zweiten (2), des fünften (3) und des dritten (4) Raums durch Abstandshalter wie erhabene, an diesen Räumen angeordnete Rippen beabstandet gehalten werden, welche diese in einem kontrollierten Abstand beabstandet halten und ihnen als Verstärkungsrippen gegen die Verformung unter der Hitzeeinwirkung dienen, ohne die Lichtausstrahlung an den Kontaktlinien der erhabenen Rippen zu verdunkeln, wobei andererseits diese Beabstandung auf den Durchfluss eines dünnschichtigen dynamischen Flusses begrenzt ist, der durch die Öffnungen der durchbrochenen Teile durchströmt, welche dem zweiten (2) und dem fünften (3) Raum einerseits und dem fünften (3) und dem dritten (4) Raum andererseits spezifisch sind.

8. Strahler nach Anspruch 3, **dadurch gekennzeichnet, dass** der zweite Raum (13) ein zwischen dem ersten Raum (1) und dem dritten Raum (4) angeordnetes durchlässiges Vlies aus hitzebeständigen, nicht oxidierenden und nicht porösen Fasern enthält und dass die Abmessungsmerkmale des ersten Raums (1) :
- sich auf eine Rotationsfläche in einem Größenverhältnis von 3/6 bis 5/6 zur Rotationsfläche des dritten Raums (4) beziehen können,
- anschließend auf eine durchbrochene Fläche von 30 % zurückgeführt,
- bei Elementaröffnungen mit einem Einheitsquerschnitt von 3 bis 3,5 mm² aufrechterhalten werden können,
- wobei die Abmessungs- und Funktionsmerkmale des dritten (4) und des vierten (5) Raums identisch bleiben in Bezug auf die Ausführungsvariante mit Vereinigung des zweiten (2) und des fünften (3) Raums.

9. Strahler nach Anspruch 4, **dadurch gekennzeichnet, dass** dessen geometrische Struktur diverse Formen annehmen kann wie:
- die konische Form, wobei die Basis des ersten (1), des zweiten (2), des dritten (4), des vierten (5) und des fünften (3) Raums nach oben gerichtet ist;
- die Kegelstumpfform, wobei die große Basis des ersten (1), des zweiten (2), des dritten (4), des vierten (5) und des fünften (3) Raums oder des ersten (1), des zweiten (13), des dritten (4) und des vierten (5) Raums nach oben gerichtet ist;
- die zylindrische Form, wenn eine ausstrahlende vertikale Rotationsfläche angestrebt wird;
- die Halbkugelform, wobei der kreisförmige Querschnitt nach oben gerichtet ist.

10. Strahler nach Anspruch 9, **dadurch gekennzeichnet, dass** der kegelstumpfförmig, zylindrisch oder halbkugelförmig ausgebildete Verteilungsraum (1) in seinem Inneren entsprechend der vertikalen Symmetrie-Mittelachse einen Vollkonus (10) oder einen sehr fein gelochten Konus enthält, dessen Spitze nach oben gerichtet im Einmündungsbereich des zugeführten Luft-Gas-Flusses angeordnet ist, so dass er zusammen mit dem ersten unter einer der oben genannten. Formen ausgebildeten Raum (1) ein Mittel zur perfekten Verteilung des Luft-Gas-Flusses liefert, welches dem Mittel gleichwertig ist, das unmittelbar mit dem ersten Raum (1) erzielt wird, wenn die Spitze der konischen Form nach unten gerichtet ist.

11. Strahler nach Anspruch 5 **dadurch gekennzeichnet, dass** dessen geometrische Struktur diverse Formen annehmen kann wie:
- die Kegelstumpfform, wobei die große Basis der Räume nach oben gerichtet ist;
- die zylindrische Form, wenn eine ausstrahlende vertikale Rotationsfläche angestrebt wird;
- die Halbkugelform, wobei die Basis mit kreisförmigem Querschnitt nach oben gerichtet ist.

12. Strahler nach Anspruch 11, **dadurch gekennzeichnet, dass** der kegelstumpfförmig, zylindrisch oder halbkugelförmig ausgebildete Verteilungsraum (1) in seinem Inneren entsprechend der vertikalen Symmetrie-Mittelachse einen Vollkonus (10) für die Vorverteilung enthält, dessen Basis am Boden anliegt und dessen Spitze nach unten gerichtet im Einmündungsbereich des zugeführten Luft-Gas-Flusses angeordnet ist, so dass er zusammen mit dem ersten unter einer der oben genannten Formen ausgebildeten Raum (1) ein Mittel zur perfekten Verteilung des Luft-Gas-Flusses liefert.

13. Strahler nach einem der vorhergehenden Ansprüchen, **dadurch gekennzeichnet, dass**
- eine justierbare Beabstandung zwischen dem dritten (4) und dem vierten (5) Raum für eine perfekt geräuschlose Betriebsweise realisiert ist,
- bei sehr niedrigem Druck,
. in der Ausführungsvariante mit Vereinigung des zweiten (2) und des fünften (3) Raums: durch die Kombination mit geringem Zwischenraum zwischen dem zweiten (2), dem fünften (3) und dem dritten (4) Raum und durch die Wechselfolge der Durchmesser der Öffnungen und des Verhältnisses der durchbrochenen Flächen dieser drei Räume zueinander,
. in der Ausführungsvariante mit dem zweiten Raum (13) anstelle des zweiten (2) und des fünften (3) Raums: durch Anlegen der faserigen Pufferstruktur des zweiten Raums (13) an die Innenseite des dritten Raums (4), dessen durchbrochene Oberfläche Öffnungen geringen Durchmessers aufweist, wobei diese Anordnung als wirksamer Dämpfer für plötzliche Luftbewegungen wirkt,
ein hoher Widerstand gegen den Wind erzielt wird.

14. Strahler nach einem der vorhergehenden Ansprüchen, **dadurch gekennzeichnet, dass** die Verbrennungsfläche (Sc) zwischen 32-mal S1 und 60-mal S1 liegt, wobei S1 dem Querschnitt des Rohrs für die Zufuhr des Luft-Gas-Flusses entspricht und Sc bevorzugt 48-mal S1 entspricht.
